**Europäisches Patentamt**

**European Patent Office**

**Office européen des brevets**

(19)

(11) Veröffentlichungsnummer: **0 102 550**

**A2**

(12) # EUROPÄISCHE PATENTANMELDUNG

(21) Anmeldenummer: **83107824.1**

(22) Anmeldetag: **08.08.83**

(51) Int. Cl.³: **H 04 N 1/40**

(30) Priorität: **10.08.82 DE 3229777**

(43) Veröffentlichungstag der Anmeldung:
**14.03.84 Patentblatt 84/11**

(84) Benannte Vertragsstaaten:
**FR GB IT NL**

(71) Anmelder: **SIEMENS AKTIENGESELLSCHAFT**
**Berlin und München Wittelsbacherplatz 2**
**D-8000 München 2(DE)**

(72) Erfinder: **Herget, Werner, Dipl.-Ing.**
**Zeismeringer Strasse 18**
**D-8000 München 71(DE)**

(54) Schaltungsanordnung zur Anpassung zweier Bildverarbeitungssysteme unterschiedlicher Auflösung.

(57) Mit der erfindungsgemäßen Schaltungsanordnung werden binäre, serielle Bildsignale, beispielsweise von Fernkopierern, in der Weise angepaßt, daß nur ein minimaler Informationsverlust auftritt. Die Bildsignale beider Auflösungen werden in die gleiche Anzahl von Blöcken unterteilt. Die n Bits eines Blockes des eingangsseitigen Bildsignals durchlaufen einen Seriell-Parallelwandler (1) und adressieren in einem Speicher (5) ein Datenwort mit m Bits. Diese m Bits durchlaufen einen Parallel-Seriellwandler (6), wodurch das ausgangsseitige Bildsignal entsteht. Durch die freie Wahl von n und m können verschiedene Auflösungen einander angepaßt werden.

EP 0 102 550 A2

SIEMENS AKTIENGESELLSCHAFT        Unser Zeichen
Berlin und München                VPA    **82 P 1 6 4 0 E**

Schaltungsanordnung zur Anpassung zweier Bildverarbeitungssysteme unterschiedlicher Auflösung

Die Erfindung betrifft eine Schaltungsanordnung gemäß dem
Oberbegriff des Patentanspruches 1.

Bei Bildverarbeitungssystemen, insbesondere bei Fernkopierern, werden zu übertragende Vorlagen in einem sendenden
Gerät zeilenweise abgetastet, über einen Übertragungskanal zu einem empfangenden Gerät übertragen, und dort zeilenweise aufgezeichnet. Die Auflösung solcher Geräte, und
damit auch die Bandbreite des Übertragungskanals, sind
durch die Anzahl der Abtast- bzw. Aufzeichnungselemente
bestimmt, die in einer Zeile enthalten sind. Die Abtastelemente zerlegen jede Zeile in eine Folge binärer, serieller Schwarz- und Weißsignale, d.h. in Bildsignale in
Form einer Bitfolge von ersten und zweiten Binärwerten.

Bei der Übertragung dieser Bildsignale tritt das Problem
der Anpassung von Geräten unterschiedlicher Auflösung
auf. Bei einem denkbaren Verfahren werden die empfangenen
Bildsignale einer ersten Frequenz mit einem Abtastsignal
einer zweiten Frequenz abgetastet. Das mit diesem Abtastsignal gewonnene Ausgangssignal mit der zweiten Frequenz
weist an den Stellen einen ersten bzw. zweiten Binärwert
auf, an denen beispielsweise bei der ansteigenden Flanke
des Abtastsignals ein erster bzw. zweiter Binärwert des
Bildsignals vorlag. Die zweite Frequenz ist größer bzw.
kleiner als die erste Frequenz, je nach dem ob die Auflösung des empfangenden bzw. sendenden Gerätes größer bzw.
kleiner ist. Dieses Verfahren hat den Nachteil, daß einzeln auftretende Binärwerte unterdrückt werden können,

Kro 1 Fra / 6.8.1982

0102550

wenn die zweite Frequenz kleiner ist als die erste Frequenz. In diesem Fall wird der Informationsgehalt der Bildsignale reduziert, wobei hierbei als Informationsgehalt die Anzahl der Übergänge zwischen erstem und zweitem Binärwert zu verstehen ist.

Es ist Aufgabe der Erfindung, eine Schaltungsanordnung anzugeben, bei der der Informationsgehalt zweier Bildsignale mit unterschiedlicher Auflösung in der Weise angepaßt wird, daß beim Übergang von einer Auflösung zur anderen nur ein minimaler Informationsverlust auftritt.

Diese Aufgabe wird erfindungsgemäß durch die im kennzeichnenden Teil des Patentanspruches 1 angegebenen Merkmale gelöst.

Ein besonderer Vorteil der erfindungsgemäßen Schaltungsanordnung ist, daß beim Übergang zu einer größeren Auflösung eine optimale Anpassung erreicht wird.

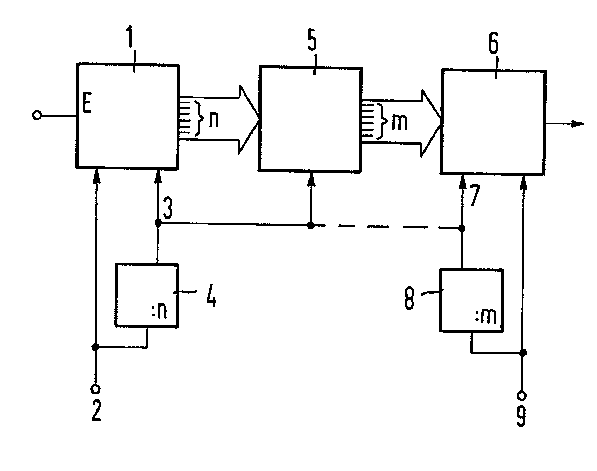

Die erfindungsgemäße Schaltungsanordnung wird im folgenden anhand eines in der Zeichnung dargestellten Ausführungsbeispiels beschrieben.

Die Bildsignale, d.h. die Schwarz-Weißsignale in Form einer seriellen Folge von ersten und zweiten Binärwerten, liegen am Eingang E eines Seriell-Parallelwandlers 1 an. Die Bildsignale werden mit einem Einlesetakt 2 eingelesen, der am Seriell-Parallelwandler 1 anliegt. Die Frequenz des Einlesetaktes 2 ist gleich der Frequenz, mit der eine Vorlage durch Abtastelemente einer Zeile abgetastet wird (die Vorlage und die Abtastelemente sind hier nicht dargestellt). Weiter liegt ein Auslesetakt 3 an, der vom Einlesetakt 2 durch einen Frequenzteiler 4 gebildet wird. Das Frequenzverhältnis Einlesetakt zu Auslesetakt ist 1:n. Die am Eingang E anliegenden Bildsignale werden im Seriell-Parallelwandler 1 in Blöcke unterteilt, wobei jeder Block n Bits enthält. Am Ausgang des Seriell-Parallelwandlers 1 werden parallel die n Bits eines Blocks mit dem Auslesetakt 3 ausgelesen und auf den Adresseingang eines Speichers 5 gegeben, der beispielsweise ein ROM-Baustein ist. Der Speicher 5 wird vom Auslesetakt 3 getaktet. Durch die anliegenden n Bits wird im Speicher 5 ein Datenwort mit m Bits adressiert. Dieses Datenwort wird ausgelesen und auf den Eingang eines Parallel-Seriellwandlers 6 gegeben. Ein am Parallel-Seriellwandler 6 anliegender Einlesetakt 7 wird durch einen Frequenzteiler 8 durch einen ebenfalls anliegenden Auslesetakt 9 gebildet. Das Frequenzverhältnis Auslesetakt 9 zu Einlesetakt 7 ist 1:m. Der Parallel-Seriellwandler 6 wandelt die parallel anliegenden m Bits in ein serielles Bildsignal um. Die Frequenz des Einlesetaktes 7 des Parallel-Seriellwandlers 6 ist hierbei gleich groß der Frequenz des Auslesetaktes 3 des Seriell-Parallelwandlers 1.

Die Wirkungsweise der erfindungsgemäßen Schaltungsanordnung wird im folgenden anhand eines Beispieles erläutert.

Fernkopierer der Gruppe 3 besitzen eine Auflösung von 1728 Bits pro Zeile, Fernkopierer der Gruppe 2 eine Auflösung von 1400 Bits pro Zeile. Beim Übergang zur kleineren Auflösung soll nur ein minimaler Informationsverlust auftreten, d.h. daß möglichst alle Schwarz-Weiß-Übergänge des Bildsignals erhalten bleiben. Beide Zeilen werden in 345,6 Blöcke unterteilt, wobei bei der Auflösung mit 1728 Bits pro Zeile 5 Bits in einem Block enthalten sind, und wobei bei der Auflösung von 1400 Bits pro Zeile 4 Bits in einem Block enthalten sind. Der Fehler, der hierbei für die kleinere Auflösung von 1400 Bits pro Zeile entsteht, beträgt 1,26 %; diese Fehlertoleranz fällt bei Fernkopierern der Gruppe 2 nicht ins Gewicht. Das Anpassungsverhältnis der Eingangs- und Ausgangsauflösung ist 5:4 Bits, wobei die Frequenz des Einlesetaktes 2 1728 Bits pro Zeile, und die Frequenz des Auslesetaktes 9 1400 Bits pro Zeile (genauer 1382,4 Bits pro Zeile) entspricht. Der Teilungsfaktor im Frequenzteiler 4 ist n=5, der Teilungsfaktor im Frequenzteiler 8 ist m=4. Die im Speicher 5 abgelegten, den Adressen zugeordneten Datenwörter, sind so gewählt, daß einzel auftretende Binärwerte nicht unterdrückt werden. Bei benachbart auftretenden gleichen Binärwerten wird eine Datenkompression durchgeführt. Die im Speicher abgelegten Daten für dieses Beispiel zeigt folgende Tabelle:

| Speicher-Adresse<br>n Bits | Speicher-Inhalt (Datenwörter)<br>m Bits | |
|---|---|---|
| 00000 | 0000 | |
| 00001 | 0001 | |
| 00010 | 0010 | |
| 00011 | 0011 | |
| 00100 | 0010 | |
| 00101 | 0101 | |
| 00110 | 0110 | |
| 00111 | 0111 | |
| 01000 | 0100 | |
| 01001 | 0101 | |
| 01010 | 0101 | x) |
| 01011 | 0101 | |
| 01100 | 0110 | |
| 01101 | 0101 | |
| 01110 | 0110 | |
| 01111 | 0111 | |
| 10000 | 1000 | |
| 10001 | 1001 | |
| 10010 | 1010 | |
| 10011 | 1011 | |
| 10100 | 1010 | |
| 10101 | 1010 | x) |
| 10110 | 1010 | |
| 10111 | 1011 | |
| 11000 | 1100 | |
| 11001 | 1001 | |
| 11010 | 1010 | |
| 11011 | 1101 | |
| 11100 | 1110 | |
| 11101 | 1101 | |
| 11110 | 1110 | |
| 11111 | 1111 | |

Bei den mit x) gekennzeichneten Kombinationen ist der Informationsgehalt, d.h. die Anzahl der Übergänge zwischen
ersten und zweiten Binärwerten, der Eingangsauflösung (5
Bits pro Block) größer als die Ausgangsauflösung (4 Bits
pro Block). Hier tritt also immer ein Informationsverlust
auf.

Beim Übergang von einer kleineren Auflösung zu einer größeren, also beispielsweise von 1400 Bits pro Zeile zu
1728 Bits pro Zeile, gewährleistet die erfindungsgemäße
Schaltungsanordnung eine optimale Anpassung. In diesem
Fall sind in der Tabelle die beiden Spalten vertauscht,
d.h. mit einer m Bits Speicheradresse wird ein n Bits Datenwort adressiert. Hier tritt kein Informationsverlust
auf. Bei benachbart auftretenden gleichen Binärwerten
wird eine Datenexpansion durchgeführt.

Ein besonders geringer Informationsverlust tritt beim
Übergang von der größeren zur kleineren Auflösung dann
auf, wenn die Speicheradresse nur wenige Bits mehr besitzt als das Datenwort.

3 Patentansprüche
1 Figur

0102550

82 P 1 6 4 0 E

Patentansprüche

1. Schaltungsanordnung zur Anpassung zweier Bildverarbeitungssysteme, insbesondere Fernkopierer, die Vorlagen mit unterschiedlicher Auflösung zeilenweise abtasten bzw. wiedergeben, wobei vom abtastenden Fernkopierer Bildsignale in Form von binären, seriellen Bitfolgen zum aufzeichnenden Fernkopierer übertragen werden, d a d u r c h g e k e n n z e i c h n e t , daß ein Seriell-Parallelwandler (1) vorgesehen ist, der die Bildsignale jeweils einer Zeile in Blöcke mit jeweils n Bits unterteilt, daß ein Speicher (5) vorgesehen ist, in dem durch diese n Bits jeweils ein Datenwort mit jeweils m Bits adressiert wird, wobei durch die Blöcke mit jeweils m Bits wieder eine Zeile gebildet wird und daß ein Parallel-Seriellwandler (6) vorgesehen ist, der die Blöcke einer Zeile mit jeweils m Bits in Bildsignale umwandelt.

2. Schaltungsanordnung nach Anspruch 1, d a d u r c h g e k e n n z e i c h n e t , daß n=5 und m=4 ist.

3. Schaltungsanordnung nach Anspruch 1 oder 2, d a d u r c h g e k e n n z e i c h n e t , daß der Speicher (5) ein ROM-Baustein ist.

Bezugszeichenliste

1 Seriell-Parallelwandler

2 Einlesetakt

3 Auslesetakt

4 Frequenzteiler

5 Speicher

6 Parallel-Seriellwandler

7 Einlesetakt

8 Frequenzteiler

9 Auslesetakt

E Eingang